# NEUE EUROPÄISCHE PATENTSCHRIFT

(11) **EP 1 512 561 B2**
(45) Veröffentlichungstag und Bekanntmachung des Hinweises auf die Entscheidung über den Einspruch: **05.11.2014**
(45) Hinweis auf die Patenterteilung: 19.12.2007
(21) Anmeldenummer: 03292180.1
(22) Anmeldetag: 04.09.2003
(51) Int. Cl.: B60H 1/00

(54) **Klimaanlage für ein Kraftfahrzeug**
Air conditioning system for a vehicle
Dispostif de climatisation pour un véhicule

(43) Veröffentlichungstag der Anmeldung: 09.03.2005
(73) Patentinhaber: Behr France Rouffach SAS, 68250 Rouffach (FR)
(72) Erfinder: Kaiser, Daniel, 90000 Belfort (FR); Hofmann, Mickaël, 68570 Wintzfelden (FR)
(74) Vertreter: Grauel, Andreas

(56) Entgegenhaltungen:
- DE-A- 4 322 981
- DE-U- 9 208 225
- JP-A- 2002 061 629
- US-A- 4 046 054

## Beschreibung

Die Erfindung betrifft eine Klimaanlage, insbesondere für ein Kraftfahrzeug.

Herkömmliche Klimaanlagen weisen ein Luftführungsgehäuse mit darin angeordneten Klappen zur Regelung des Luftstroms auf, welche mittels eines Getriebe-Motors betätigt werden. Hierfür ist der Getriebe-Motor außerhalb des Luftführungsgehäuses angebracht, wofür der Getriebe-Motor an einer Grundplatte befestigt ist, welche den Getriebe-Motor stützt. Ferner sind an der Grundplatte eine oder mehrere Kullssenscheiben und gegebenenfalls Hebel zur Betätigung der Klappen angebracht, welche Teil der Kinematik zur Regelung des Luftstroms sind, so dass die Grundplatte auch diesbezüglich eine stützende Funktion hat. Aus der DE 43 22 981 A1 ist als nächstliegender Stand der Technik ein Stellantrieb für die Luftklappe einer Heizungs- oder Klimaanlage bekannt, wobei ein Elektromotor in einem Gehäuse angeordnet ist und die Hebel der Hebeluntersetzung außerhalb des Gehäuses am Gehäuse gelagert sind. Eine derartige Anordnung lässt jedoch noch Wünsche offen.

Es ist Aufgabe der Erfindung, eine verbesserte Klimaanlage zur Verfügung zu stellen. Insbesondere sollen die Herstellungskosten gesenkt werden.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage, insbesondere eine Kraftfahrzeug-Klimaanlage, mit einem Luftführungsgehäuse, an dem ein Motor mittels Befestigungsmittel angebracht ist, welcher zur Betätigung von Klappen zur Regelung des das Luftführungsgehäuse durchströmenden Luftstroms dient, vorgesehen, bei der ein Befestigungsmittel den Motor direkt am Luftführungsgehäuse fixiert, und das Befestigungsmittel gleichzeitig auch ein weiteres Teil einer Hebel-Getriebe-Anordnung am Luftführungsgehäuse anbringt, so dass die Grundplatte gemäß dem Stand der Technik entfällt. Hierbei dient eines der bevorzugt drei Befestigungsmittel gleichzeitig der Befestigung eines Teils der Kinematik zur Regelung der Klappen im Inneren des Luftführungsgehäuses. Das Luftführungsgehäuse ist so ausgebildet, dass die Befestigungsmittel direkt an demselben angebracht werden können, wobei die Befestigungsmittel durch Schrauben gebildet werden, die in entsprechende Schraubdome eingeschraubt sind.

Als weiteres Teil sind eine oder mehrere Kulissenscheiben, welche der Regelung der Klappen im Luftführungsgehäuse dienen oder diesen zugeordnete Hebel vorgesehen.

Im Gehäuse des Motors sind vorzugsweise drei oder mehr Aufnahmen vorgesehen, welche zur Aufnahme von Befestigungsmitteln dienen. Dabei werden die Aufnahmen insbesondere durch Bohrungen oder Aussparungen gebildet, durch welche Schrauben, die als Befestigungsmittel dienen, gesteckt werden.

Vorzugsweise weist das weitere Teil der Hebel-Getriebe-Anordnung, welches am Luftfühmngsgehäuse angebracht ist, eine Verzahnung auf, weiche mit einem Zahnsegment zusammenwirkt, welches an der Antriebswelle des Motors vorgesehen ist.

Bevorzugt ist das weitere Teil der Hebel-Getriebe-Anordnung, welches am Luftführungsgehäuse angebracht ist, gegenüber dem Befestigungsmittel verschwenkbar. Hierfür kann insbesondere eine entsprechende Lagerung vorgesehen sein.

Im Folgenden wird die Erfindung anhand eines Ausführungsbeispiels unter Bezugnahme auf die Zeichnung im Einzelnen erläutert. In der Zeichnung zeigen:

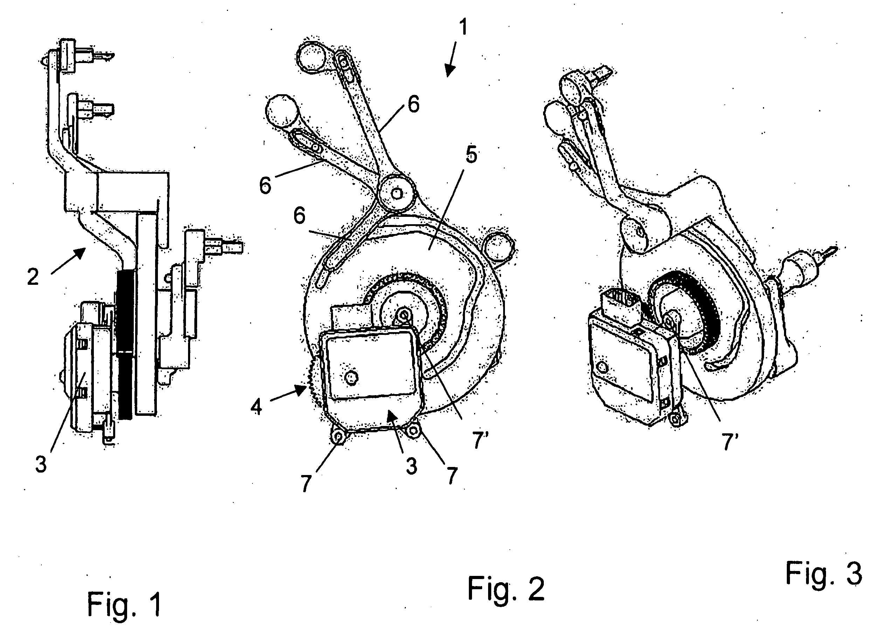

Fig. 1 eine Seitenansicht auf einen Teil einer Klimaanlage ohne das Luftführungsgehäuse derselben,
Fig. 2 eine Draufsicht auf die Klimaanlage von Fig. 1, und
Fig. 3 eine perspektivische Ansicht der Klimaanlage von Fig. 1.

Eine Kraftfahrzeug-Klimaanlage 1 (nur teilweise dargestellt) weist für die Regelung der Luftströmung eine Mehrzahl von Klappen auf, die über eine Hebel-Getriebe-Anordnung 2 von einem Getriebe-Motor 3 betätigt werden, der am Luftführungsgehäuse (nicht dargestellt) angebracht ist. Dabei treibt der Motor 3 ein an der Antriebswelle angebrachtes Zahnsegment 4 an, das seinerseits eine Kulissenscheibe 5 mittels einer an der Kulissenscheibe 5 vorgesehenen Verzahnung antreibt. In die Kulissenscheibe 5 greift auf bekannte Weise ein Hebelarm 6 ein, welcher starr mit zwei weiteren Hebelarmen 6 verbunden ist. Diese weiteren Hebelarme 6 betätigen die Klappen zur Regelung der Luftströmung (nicht dargestellt), welche innerhalb des Luftführungsgehäuses angeordnet sind.

Der Motor 3 ist mittels Befestigungsmittel, vorliegend mittels dreier Schrauben 7, am Luftführungsgehäuse der Klimaanlage 1 befestigt, welches hierfür entsprechend ausgebildete Schraubdome aufweist. Eine Schraube 7' der drei Schrauben 7 dient gleichzeitig als Befestigungsmittel für die Kulissenscheibe 5. Es ist keine Grundplatte erforderlich.

### Bezugszeichenliste

1 Klimaanlage
2 Hebel-Getriebe-Anordnung
3 Motor
4 Zahnsegment
5 Kulissenscheibe
6 Hebelarm
7, 7' Schraube

## Patentansprüche

1. Klimaanlage, insbesondere für ein Kraftfahrzeug, mit einem Luftführungsgehäuse, an dem ein Motor (3) mittels Befestigungsmitteln angebracht ist, welcher zur Betätigung von Klappen zur Regelung des das Luftführungsgehäuse durchströmenden Luftstroms dient, wobei eines der Befestigungsmittel den Motor (3) direkt am Luftführungsgehäuse fixiert und gleichzeitig auch ein weiteres Teil einer Hebel-Getriebe-Anordnung (2) am Luftführungsgehäuse anbringt, wobei das Befestigungsmittel eine Schraube (7') ist, welche in einen am Luftführungsgehäuse vorgesehenen Schraubdom eingeschraubt ist, wobei auf den Schaft der Schraube (7') das weitere Teil der Hebel-Getriebe-Anordnung (2) gesteckt ist, wobei als weiteres Teil eine oder mehrere Kulissenscheiben (5) oder ein oder mehrere Hebel (6) vorgesehen sind.

2. Klimaanlage nach Anspruch 1, **dadurch gekennzeichnet, dass** im Gehäuse des Motors (3) drei oder mehr Aufnahmen vorgesehen sind, welche zur Aufnahme von Befestigungsmitteln dienen.

3. Klimaanlage nach einem der vorhergehenden Ansprüche, **dadurch gekennzeichnet, dass** das weitere Teil der Hebel-Getriebe-Anordnung (2), welches am Luftführungsgehäuse angebracht ist, eine Verzahnung aufweist, welche mit einem Zahnsegment (4) zusammenwirkt, welches an der Antriebswelle des Motors (3) vorgesehen ist.

4. Klimaanlage nach einem der vorhergehenden Ansprüche, **dadurch gekennzeichnet, dass** das weitere Teil der Hebel-Getriebe-Anordnung (2), welches am Luftführungsgehäuse angebracht ist, eine Kulissenscheibe (5) ist, welche eine Verzahnung aufweist, die mit einem Zahnsegment (4) zusammenwirkt, welches an der Antriebswelle des Motors (3) vorgesehen ist

5. Klimaanlage nach einem der vorhergehenden Ansprüche, dadurch gekennzeichnen, dass das weitere Teil der Hebel-Getriebe-Anordnung (2), welches am Luftführungsgehäuse angebracht ist, gegenüber dem Befestigungsmittel verschwenkbar ist.

## Claims

1. Air conditioning system, in particular for a motor vehicle, with an air supply housing on which a motor (3) used to actuate valves in order to regulate the air flow circulating through the air supply housing is mounted by fixing means, and one of the fixing means secures the motor (3) directly on the air supply housing and simultaneously also mounts another part of a lever-gear arrangement (2) on the air supply housing, and the fixing means is a screw (7') which is screwed into a screw dome provided on the air supply housing, and the other part of the lever-gear arrangement (2) is fitted on the shaft of the screw (7'), and another part in the form one or more driving gears (5) or one or more levers (6) is provided.

2. Air conditioning system as claimed in claim 1, **characterised in that** three or more mounts are provided in the housing of the motor (3) which are used to accommodate fixing means.

3. Air conditioning system as claimed in one of the preceding claims, **characterised in that** the other part of the lever-gear arrangement (2) mounted on the air supply housing has toothing which co-operates with a toothed segment (4) provided on the drive shaft of the motor (3).

4. Air conditioning system as claimed in one of the preceding claims, **characterised in that** the other part of the lever-gear arrangement (2) mounted on the air supply housing is a driving gear (5) which has toothing co-operating with a toothed segment (4) provided on the drive shaft of the motor (3).

5. Air conditioning system as claimed in one of the preceding claims, **characterised in that** the other part of the lever-gear arrangement (2) mounted on the air supply housing can be pivoted relative to the fixing means.

## Revendications

1. Installation de climatisation, en particulier pour un véhicule automobile, comportant un boîtier de guidage d'air, contre lequel un moteur (3), servant à actionner des volets de réglage du flux d'air circulant à travers le boîtier de guidage d'air, est attaché par des moyens de fixation, l'un des moyens de fixation fixant le moteur (3) directement contre le boîtier de guidage d'air et attachant en même temps contre le boîtier de guidage d'air également une autre partie d'un système à levier et engrenage (2), le moyen de fixation étant une vis (7'), qui est vissée dans un trou fileté prévu dans le boîtier de guidage d'air, l'autre partie du système à levier est engrenage (2) étant enfichée sur la tige de la vis (7') un ou plusieurs disques à coulisse (5') ou un ou plusieurs leviers (6) étant prévus pour former l'autre partie.

2. Installation de climatisation selon la revendication 1, **caractérisée en ce que** dans le boîtier du moteur (3) sont prévus trois ou davantage de logements, destinés à recevoir des moyens de fixation.

3. Installation de climatisation selon l'une quelconque des revendications précédentes, **caractérisée en ce que** l'autre partie du système à levier et engrenage (2), qui est attachée au boîtier de guidage d'air, comporte une denture qui coopère avec un segment denté (4), qui est prévu sur l'arbre d'entraînement du moteur (3).

4. Installation de climatisation selon l'une quelconque des revendications précédentes, **caractérisée en ce que** l'autre partie du système à levier et engrenage (2), qui est attachée au boîtier de guidage d'air, est un disque à coulisse (5), qui comporte une denture qui coopère avec un segment denté (4), qui est prévu sur l'arbre d'entraînement du moteur 3).

5. Installation de climatisation selon l'une quelconque des revendications précédentes, **caractérisée en ce que** l'autre partie du système à levier et engrenage (2), qui est attachée au boîtier de guidage d'air, est apte à pivoter par rapport au moyen de fixation.
